# EUROPEAN PATENT APPLICATION

(11) **EP 4 083 858 A1**
(43) Date of publication of application: **02.11.2022**
(21) Application number: 21171245.0
(22) Date of filing: 29.04.2021
(51) Int. Cl.: G06K 9/62

(54) **TRAINING DATA SET REDUCTION AND IMAGE CLASSIFICATION**

(71) Applicant: Siemens Aktiengesellschaft, 80333 München (DE)
(72) Inventor: Berger, Erik, 04668 Grimma (DE); Siegert, Leon, 28207 Bremen (DE); Grothmann, Ralph, 27356 Rotenburg (DE)

(57) **Abstract**

A method of providing a set (S) of training images for training an image classification algorithm (ML2), the method comprising the steps of: selecting at least one first image (11) from a collection (T) of images, training an autoencoder (ML1), based on the first image (11), adding the first image (11) to the set (S) of training images (S), determining, by the autoencoder (ML1), for each one of a set of remaining images from the collection (T) of images a score (S11-S17) based on a distance measure between an image input and a reconstructed image output by the autoencoder (ML1), selecting at least one second image (16) from the remaining images based on its score (S16), adding the second image (S16) to the set of training images (S).

## Description

### TECHNICAL FIELD

The present disclosure relates to digital information processing, and particularly to labeling images for information retrieval. Furthermore, the present disclosure relates to creating training sets of images for training a machine learning model. Finally, the present disclosure relates to training a machine learning model for classification.

### BACKGROUND

An image classification method is an image processing method for distinguishing objects of different classes according to different features reflected in image information and specifically, is using a computer to perform quantitative analysis on an image to classifying the image. After the image is classified, various applications, such as image retrieval, video surveillance, and image-related semantic analysis, may be further performed according to a classification result. An artificial neural network model may be used to implement relatively accurate image classification. However, with continuous expansion and refinement of image classification applications, requirements on accuracy of image classification are continuously raised. Therefore, how to improve accuracy of image classification is an important problem that needs to be resolved currently. An exemplary image classification method is described in US patent publication US 10325181 B2.

As is generally understood in the art, image classification algorithms are trained using a data set of representative images. On the other hand, machine learning algorithms require large volumes of training data to draw useful conclusions.

### SUMMARY

It is an object to reduce the number of training images required for training a machine learning model for classification. Furthermore, it is an object to reduce the manual labeling required for creating a set of training images.

According to a first aspect the object is achieved by a method of providing a set of training images for training an image classification algorithm. The method comprising the step of selecting at least one first image from a collection (T) of images. The method further comprising the step of training an autoencoder, based on the first image. The method further comprising the step of adding the first image to the set of training images. The method further comprising the step of determining, by the autoencoder, for each one of a set of remaining images from the collection of images a score based on a distance measure between an image input and a reconstructed image output by the autoencoder. The method further comprising the step of selecting at least one second image from the remaining images based on its score. The method further comprising the step of adding the second image to the set of training images.

According to a second aspect the object is achieved by a computer program product, comprising computer program code, that when executed, performs the steps according to the first aspect. Preferably the program code comprises computer readable instructions that are stored in a non-transitory memory. The computer readable instructions being executable by a processing circuitry, e.g., on a computer.

According to a third aspect the object is achieved by an apparatus, preferably comprising a processing circuitry, operative to perform the steps of according to the first aspect.

### BRIEF DESCRIPTION OF THE DRAWINGS

- Figure 1: shows training images selected from a collection of images.
- Figure 2: shows training images where an additional image is added to the training images from the collection of images.
- Figure 3: shows a training image that is used for training a first machine learning model.
- Figure 4: shows the creation of distance scores using the first machine learning model.
- Figure 5: shows training images that are used for training a second machine learning model.
- Figure 6: shows an architecture of the first machine learning model.
- Figure 7: shows a sorting process based on image acquisition and control unit using a machine learning model for classification.
- Figure 8: shows an image labeling tool for selecting and labeling images, the image labeling tool indicating the information extracted from a first number training images.
- Figure 9: shows an image labeling tool for selecting and labeling images, the image labeling tool indicating the information extracted from a first number of training images.

### DETAILED DESCRIPTION

The labeling, also referred to as annotation, of images for the training of artificial intelligence (AI) is an elaborate process which requires industry-specific expert knowledge and experience in the field of AI. There are third-party software tools on the market, which allow AI laypeople to manually label their images and export it for further use for modeling by the AI expert. The labeling process is performed manually for each image before the AI expert starts to work.

Thus, this stage in model making is time-intensive, requires knowledgeable personnel and incurs cost. The present disclosure envisions to optimize this process and make it more efficient.

Until now, before and during modelling, the AI expert estimated whether a sufficient number of images was already available. If necessary, the customer had to label further images, whereby often a high effort was incurred due to the additional communication but also by the labeling of unnecessary image material. Often several thousand images are needed to set up and train a Convolutional Neural Network. Previously, all images had to be extensively viewed. The present disclosure significantly reduces the effort required.

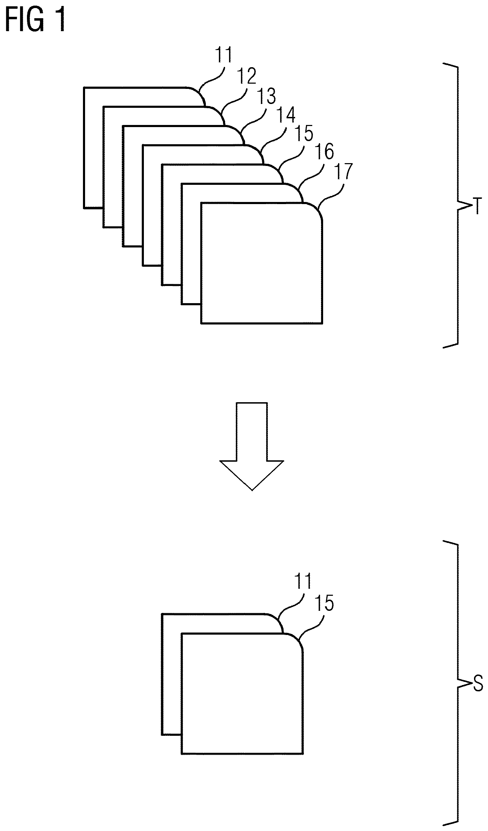

Figure 1 shows a set of training images S selected from a collection of images T. The collection of images T may be obtained by way of a camera. Each image of the collection of images T may be obtained by photographing the one or more target objects 20 using the camera 30. The collection of images may be then stored on a non-transitory storage medium.

In order to provide training images from the collection T, a user may select one or more of the images from the collection and label them. The images and the label may then be associated with one another and may again be stored on the storage medium. The selection, labeling and storing may be performed using an image labeling tool.

In general, it is desired to reduce the number of images for training an image classification algorithm. Significant processing time is often wasted because of the unnecessary processing of redundant and non-representative images. Substantial speedup can often be achieved through the elimination of these types of images. Furthermore, once non-representative images are removed, the storage and transmission of these images becomes less problematic.

The goal of selecting, also referred to as sampling, is to select a subset of images that adequately represents the complete collection of images. Then this subset, i.e. the set of training images, may be used for training an image classification algorithm. The selection aims at selecting pertinent images only as an input to the subsequent image classification algorithm. Thus, reducing the number of images in the set of training images S leads to discarding information which is irrelevant or redundant. Ideally, after the selection of images has been carried out, a smaller number of images representing the same or similar information content as the original dataset, i.e. the collection of images T. The goal of the selection is to increase the effectiveness of training subsequent the machine learning algorithm when the available number of images is large.

Formally, the reduction of images aims at finding the reduced number of images, which is the subset of the collection of images, such that the performance criterion of the machine learning algorithm is maximized. From the above perspective, the performance of the classifier induced from the reduced number of images should be better or at least not worse than the classifier induced from the original dataset. As will be described later, the image classification algorithm may be used for quality inspection, object recognition, object location and /or anomaly detection.

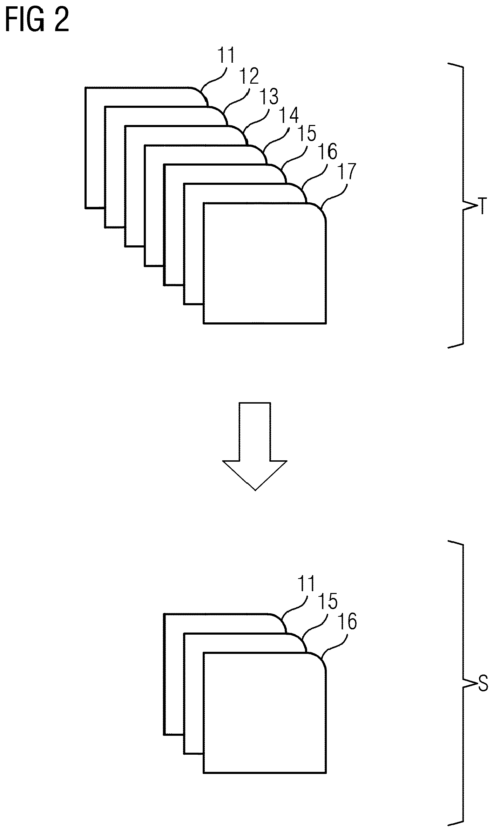

Figure 2 shows a set of training images that has been extended, i.e. an additional image is added to the training images S from the collection of images T.

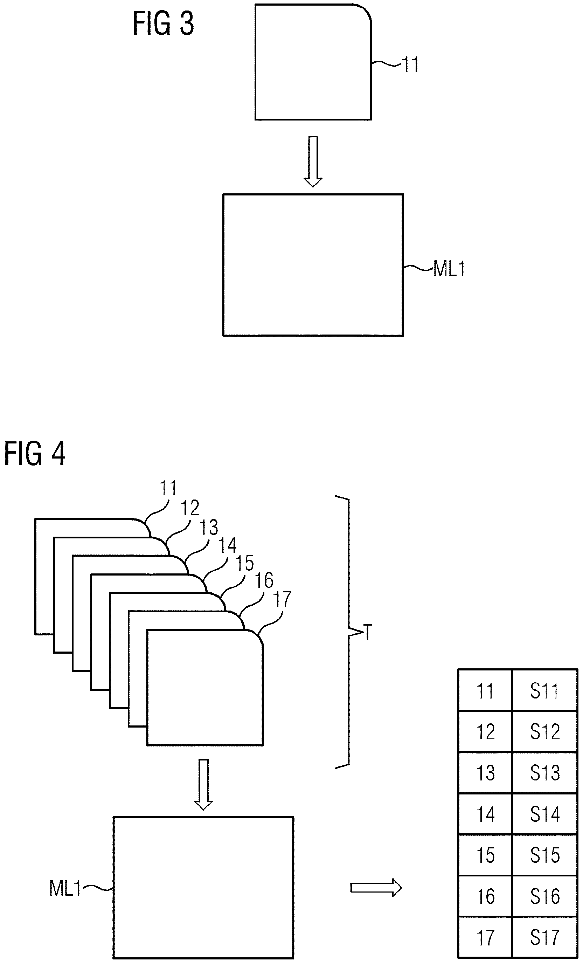

It is proposed to make use of a first machine learning model ML1, i.e. an autoencoder, in order to reduce the number of training images. Figure 3 shows a training image that is used for training a first machine learning model. Here, a machine learning model refers to the output of a machine learning algorithm run on data. The machine learning model represents what was learned by a machine learning algorithm. The machine learning model may be saved, e.g., on said storage medium, after running a machine learning algorithm on training data and represents the rules, numbers, and any other algorithm- specific data structures required to make predictions. The machine learning model may comprise both data and a procedure for using the data to make a prediction. Performing machine learning thus involves creating a model, which is trained on some training data and then can process additional data to make predictions.

In supervised learning, a machine learning algorithm is shown a training set S which is a collection of training images, also referred to as instances. After learning from the training set, the learning algorithm is presented with additional images, and the algorithm must generalize, i.e., it must use some inductive bias to decide what the output value should be even if the new image was not in the training set.

It is proposed to use an autoencoder in order to determine whether the information content of an image is already known to the autoencoder and thus whether an image having the same information content is already present in the set of training images. Thus, in a first step an image is selected from the collection of images T. This step may be performed by a user, e.g., using the image annotation tool. The first image 11 from the collection of images may be used to train said autoencoder ML1.
The result is a trained machine learning model, i.e. trained autoencoder.

It is possible to use more than one image to train said autoencoder. That is, at least one second image from the collection of images T may be selected and used for training the autoencoder. For example, if it is (intuitively) apparent to a user that the first image is not representative of the information content of the collection of images, the user may of course discard that fist image or select a second image in addition.

The trained autoencoder may then be used for determining, a score based on a distance measure between an image input and a reconstructed image output by the autoencoder.

Figure 4 shows the creation of distance scores using the first machine learning model. Now, all remaining images from the collection of images T are input into the autoencoder, e.g., one image after the other. As a result, a score may be obtained for each one of the images from the collection of images T. The scores may take different values, wherein each value measures the distance between an image input and a reconstructed image output by the autoencoder. The scores may be ordered according to their values and/or presented to a user. The one or more images with the highest score are selected from the remaining images and are added to the set of training images S. It is proposed to add only the images with the highest score to the set of training images. Alternatively, one or more images with a score exceeding a predetermined threshold may be added to the set of training images. Again, the scores may be associated to the one or more images and stored on said storage medium.

On the other hand, one or more images from the collection of images, e.g. below a further threshold, may be discarded and not be used for further steps.

The (extended) set of training images, comprising the one or more first images 11 and/or the one or more second images 15 may be used to retrain the autoencoder or train a new autoencoder. The procedure may thus be iteratively repeated until the autoencoder is able to reconstruct all of the images from the collection of images with sufficient accuracy, i.e. with a reconstruction error below said threshold.

Thus beginning with an empty set S, each iteration cycle one or more training images are added to the set of training images S from the collection of images T. The iteration is topped once the autoencoder is able to reconstruct the images of the collection of images with sufficient accuracy.

By reducing the number of the training images memory on the storage medium may saved, since images with redundant information content may be discarded. As a further result training of an image classification algorithm may be accelerated. A reduction in the number of training images will typically yield a corresponding reduction in the time it takes for training.

The proposed method of providing a set of training images may be done just once on a collection of images. However, it may be possible that supplemental images become available, e.g., because these supplemental images of the target object(s) 20 have been acquired by the camera 30 in the meantime. In such a case it is possible to run the method proposed again for the supplemental images and add further images to the training data set if required.

Now, once one or more of the training images have been determined, the one or more images may be labeled, using the image labeling tool, e.g., using bounding boxes according to the COCO, Pascal VOC etc. format. To that end, the training images may be labeled. The label can be assigned in the form of metadata and may be associated with the image and/or stored together with the image on the storage medium. The label may correspond to one or more classes or categories. For example, the classes or categories may correspond to one or more properties, e.g., operating states, of the target object. The images may be labeled by a user using the image annotation tool.

The collection of images may comprise non-labeled images, whereas the training images in the set of training images are all labeled. As the case may be, each of the images selected from the remaining images may be labeled in order to be added to the set of training images. The set of training images, preferably with a label assigned to it may be used for training a second machine learning model ML2.

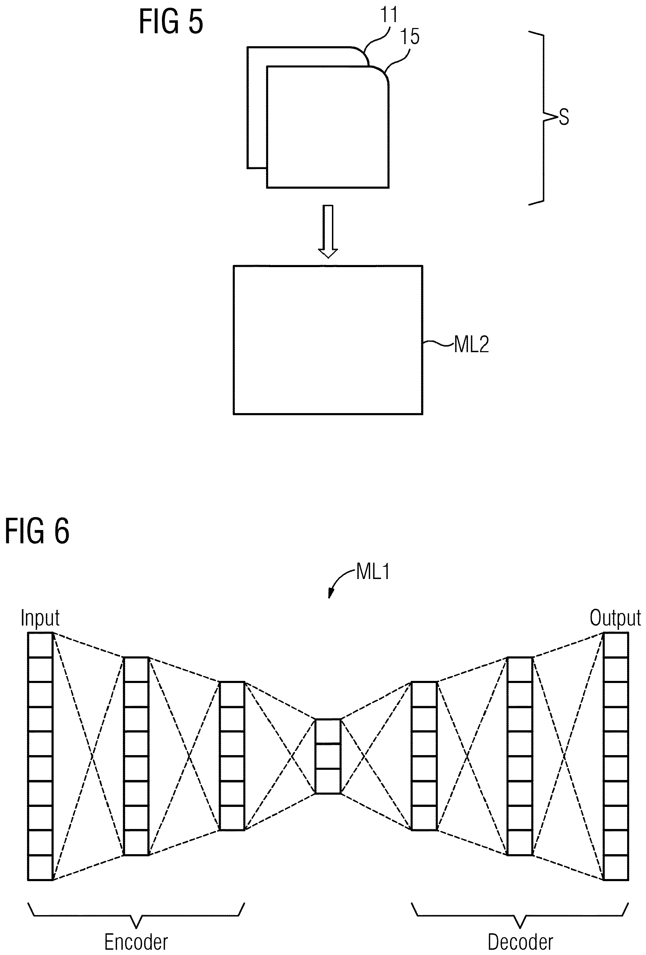

Figure 5 shows training images that are used for training a second machine learning model. The second machine learning model is an image classification algorithm, i.e. classifier, that is trained based on the set of training images. The trained image classification algorithm takes an image as input and assigns a label to the image input. Therein the one or more labels assigned to the training images corresponds to the labels assigned by the image classification algorithm. Due to the reduced number of training images S the training of the second machine learning model is accelerated.

In operation the classifier may be used to assign a label to the images obtained, e.g., by a camera, in order for a superordinated process to be carried out, as will be described later.

primarily used the Euclidean distance function in the past, they can typically make use of the HVDM distance function or other distance functions when needed

Figure 6 shows an architecture of the first machine learning model in the form of an autoencoder, AE. An AE is an artificial neural network able to learn new information encodings through unsupervised learning. The AE is trained to learn an internal representation that allows reproducing the input into the output through a series of hidden layers. The goal is to produce a more compressed representation of the original information in the hidden layers, so that it can be used in other tasks.

The AE shown is a feedforward neural network without cycles, so the information always goes in the same direction. The AE is formed by a series of layers: an input layer, a series of hidden layers, and an output layer, with the units in each layer connected to those in the next. The main characteristic of the AE is that the output has the same number of nodes as the input, since the goal is to reproduce the latter in the former throughout the learning process.

Two parts can be distinguished in an AE, the encoder and the decoder. The first is made up of the input layer and the first half of hidden layers. The second is composed of the second half of hidden layers and the output layer. As can be seen, the structure of an AE always is symmetrical.

Training the AE may require one or more of the following steps for each training image:
1: Do a feed-forward through the AE to obtain output
2: Calculate error
3: Backpropagate the error through the AE and perform weight update.

Thus, once trained, the AE may provide an indication about the differences in information content between the images used for training the autoencoder and the image(s) fed into the autoencoder. To that end a reconstruction error may be used. The reconstruction error is the distance between the original input and its autoencoder reconstruction. A score may be determined using the AE wherein the score is based on a distance measure between the input and the output of the autoencoder. When the AE uses only linear activation functions and the loss function is the mean squared error, MSE, the AE corresponds to a principal component analysis, PCA.

Now, outlier detection, also referred to as anomaly detection, may be used to identify images input into the AE that differ from the information content of the training images used to train the AE. To that end a distance measure may be used. The AE may use a distance function to determine how similar a new image input is compared to the already selected training images.

For example, a distance to the mean of more than 6 standard deviations may be used to identify an image input as an outlier. Furthermore, the interquartile range, IQR, may be used to identify an image input as an outlier. In case one or more of such (outlier) images are found by the trained AE in (the set of remaining images from) the collection of images, a score of the respective image based on the distance measure used may be determined.

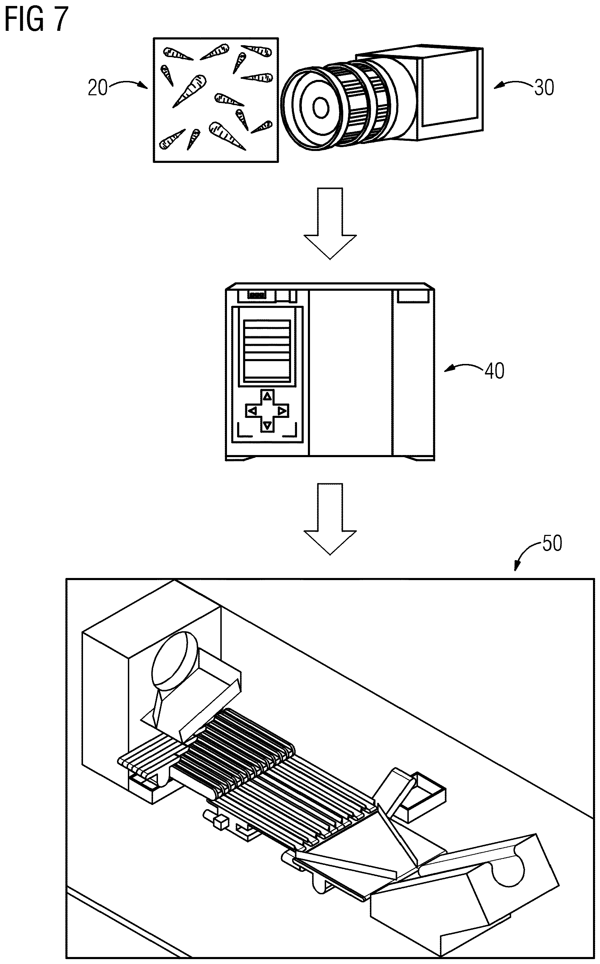

Figure 7 shows a sorting process based on image acquisition and control unit 40 using a machine learning model for classification. In the present example, carrots are to be sorted according to their size. To that end, images of the carrots on a conveyor are acquired using a camera 30. The images are transmitted to a control unit 40 for evaluation and processing. The images may for a collection of images that are stored on a storage medium within the control unit. Based on an image classification algorithm executed by processing means of the control unit, the control unit 40 controls a sorting machine 50 that separates and thereby sorts the items on the conveyor, in this case carrots. Of course, other target objects 20 than carrots, e.g., on a conveyor may be used.

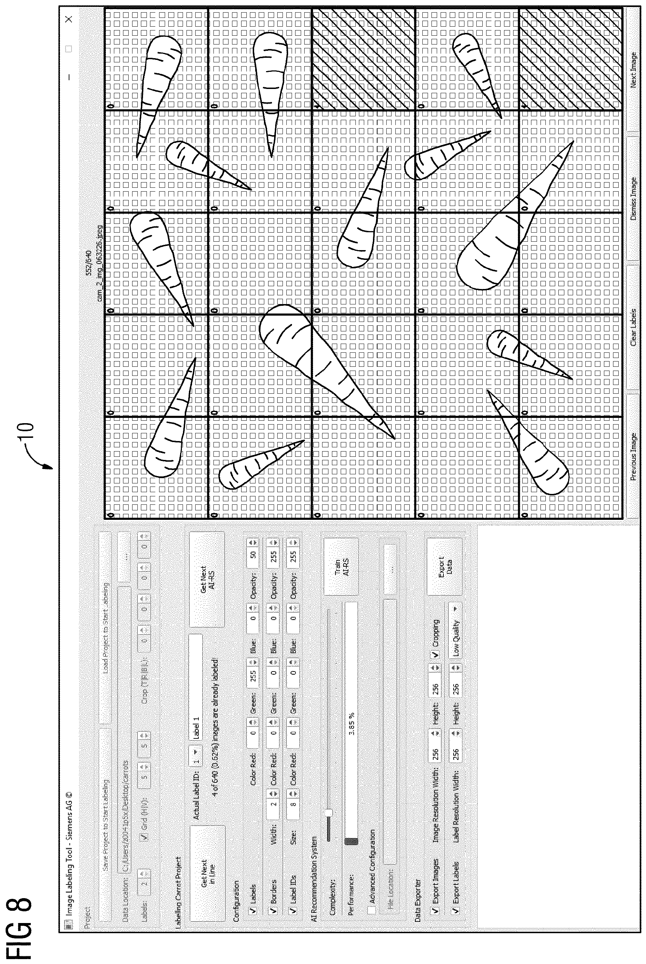

Figure 8 shows an image labeling tool for selecting and labeling images, the image labeling tool indicating the information extracted from a first number training images. Here, the graphical user interface, GUI, of the image labeling tool is shown. The number of labels that shall be assigned can be set. Furthermore, the number of bounding boxes by way of grid lines may be set. Furthermore, for the labeling of one or more images from set of training images and/or the collection of images may be selected.

The user may then perform the labeling of the image shown in the GUI. Here, the labeling refers to the presence of carrots in the respective boxes.

Based on the labeled image the AE can be trained. Subsequently a performance indication indicating the information extracted from a first number of training images may be displayed.

The images labeled may be stored on a storage medium. The resolution and/or other properties of the images to be stored may be set in the image labeling tool.

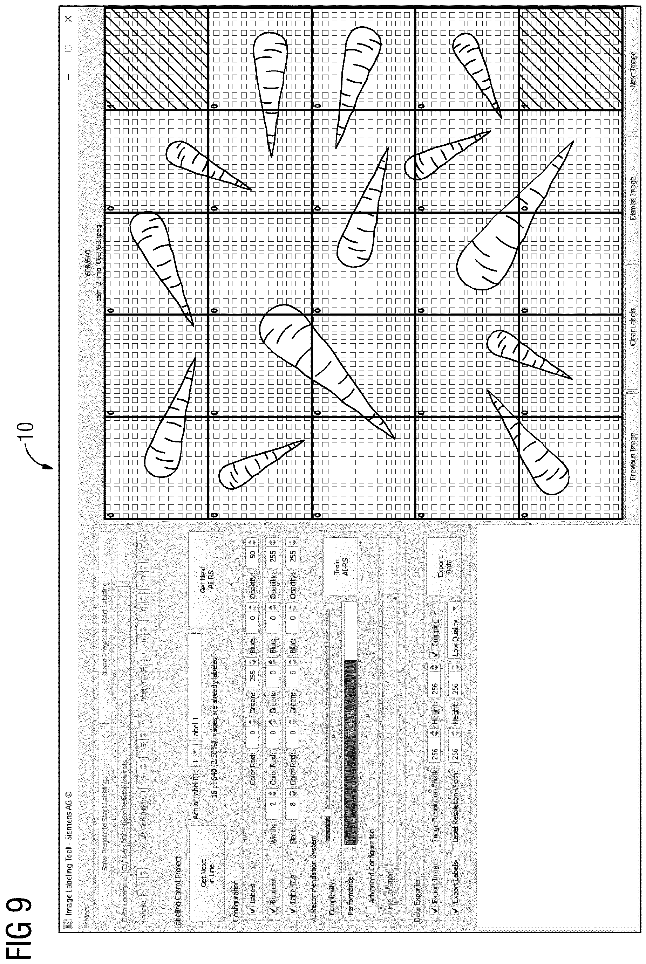

Figure 9 shows an image labeling tool for selecting and labeling images, the image labeling tool indicating the information extracted from a first number of training images. Compared to Figure 8, the performance indication is higher. This implies that the images used for training the AE already reflect much of the information content of the collection of images T.

The set of training images may thus be used for training a second machine learning model, such as an image classification algorithm.

## Claims

1. A method of providing a set (S) of training images for training an image classification algorithm (ML2), the method comprising the steps of:
selecting at least one first image (11) from a collection (T) of images,
training an autoencoder (ML1), based on the first image (11), adding the first image (11) to the set (S) of training images (S),
determining, by the autoencoder (ML1), for each one of a set of remaining images from the collection (T) of images a score (S11-S17) based on a distance measure between an image input and a reconstructed image output by the autoencoder (ML1), selecting at least one second image (16) from the remaining images based on its score (S16),
adding the second image (S16) to the set of training images (S) .

2. The method according to the preceding claim, further comprising the step of:
selecting, using an image labeling tool (10), the first image (11) from the collection (T) of images, the collection of images (T) comprising unlabeled images and
labeling, using the image labeling tool (10), the first image (11), e.g., using bounding boxes according to the COCO, Pascal VOC etc. format.

3. The method according to any one of the preceding claims, further comprising the step of:
selecting, using the image labeling tool (10), the second image (16) based its score (S16), and
labeling, using the image labeling tool (10), the second image (16), after determining the score for each image of the set of remaining images.

4. The method according to any one of the preceding claims, wherein the step of selecting, using the image labeling tool (10), the second image (16), comprises:
selecting one or more images from the set of remaining images whose score exceeds a predetermined threshold, e.g., selecting one or more images from the set of remaining images whose score exceeds the interquartile range.

5. The method according to any one of the preceding claims, further comprising the step of:
adapting, using the image labeling tool (10), the predetermined threshold in order to achieve a desired accuracy between the image input and a reconstructed image output by the autoencoder for the set of remaining images.

6. The method according to any one of the preceding claims, further comprising the step of:
(re-)training the autoencoder (ML1) based on the at least one second image, and
determining, by the autoencoder (ML1), for each one of the images from the set of remaining images from the collection (T) of images a score based on a distance measure between an image input and a reconstructed image output by the autoencoder,
adding at least one further image from the set of remaining images based on its score to the set of training images (S).

7. The method according to any one of the preceding claims, further comprising the step of:
repeating the steps of any one of the preceding claims until the score for each of the images of the set of remaining images is below the predetermined threshold.

8. The method according to the preceding claim, further comprising the step of:
training the image classification algorithm (ML2) based on the set of training images (S).

9. The method according to the preceding claim, further comprising the step of:
obtaining the collection of images (T) by photographing one or more target objects (20).

10. A computer program product, comprising computer program code, that when executed, performs the method steps of any one of the preceding claims.

11. An apparatus, preferably comprising a processor, operative to perform the method steps of any one of the claims 1 to 9.
